# EUROPÄISCHE PATENTSCHRIFT

(11) **EP 2 150 714 B1**
(45) Veröffentlichungstag und Bekanntmachung des Hinweises auf die Patenterteilung: **04.09.2013**
(21) Anmeldenummer: 08707678.2
(22) Anmeldetag: 12.02.2008
(51) Int. Cl.: F16C 33/46, F16C 33/54, F16C 35/063

(54) **VERFAHREN DER ANORDNUNG EINES UNGETEILTEN WÄLZLAGERS AN EINER WELLE UND WÄLZLAGER DAFÜR**
METHOD FOR ARRANGING AN UNDIVIDED ROLLER BEARING AT A SHAFT, AND ROLLER BEARING THEREFOR
PROCÉDÉ DE MISE EN PLACE D'UN ROULEMENT EN UNE PIÈCE SUR UN ARBRE ET ROULEMENT À CET EFFET

(30) Priorität: 19.03.2007 DE 102007013039
(43) Veröffentlichungstag der Anmeldung: 10.02.2010
(73) Patentinhaber: Bayerische Motoren Werke AG, 80809 München (DE); Schaeffler Technologies AG & Co. KG, 91074 Herzogenaurach (DE)
(72) Erfinder: KREIL, Franz, 85652 Pliening (DE); SOLFRANK, Peter, 96158 Frensdorf (DE); MEDERER, Tobias, 80596 Schwanstetten (DE); SCHULLAN, Philipp, 81243 München (DE)
(74) Vertreter: Söllner, Udo
(86) Internationale Anmeldenummer: PCT/EP2008/001058
(87) Internationale Veröffentlichungsnummer: WO 2008/113437

(56) Entgegenhaltungen:
- WO-A-03/027446
- DE-A1- 2 318 341
- JP-A- 2005 172 059
- JP-A- 2006 132 623
- JP-A- 2007 239 834
- US-A- 3 975 066

## Beschreibung

Die vorliegende Erfindung betrifft ein Verfahren der Anordnung eines einen ungeteilten Lageraußenring und einen ungeteilten Lagerkäfig aufweisenden Wälzlagers an einer Welle, die mindestens einen Wellenabsatz mit einem Durchmesser aufweist, der größer ist als Durchmesser der Wälzkörperlaufbahn. Die Erfindung betrifft darüber hinaus die Verwendung des Verfahrens zur Herstellung einer gebauten Welle und ein Wälzlager mit einem Lageraußenring und einem davon trennbaren Wälzkörper führenden Lagerkäfig. Schließlich betrifft die Erfindung auch eine Welle mit einem rohrstückförmigen Grundkörper und mindestens einem vorstehend genannten Wälzlager.

Wenn an einer Welle, beispielsweise einer Nockenwelle oder einer Verstellwelle für einen variablen Ventiltrieb ein Wälzlager angeordnet wird, so wird dies üblicherweise mit seinem Lagerkäfig und daran angeordnetem Lageraußenring einstückig auf die Welle aufgeschoben, so dass die Wälzkörper an der Laufbahn zur Anlage kommen. Die Laufbahn weist dabei einen Durchmesser auf, der geringfügig größer ist als der Grunddurchmesser der Welle. Ein solches Montageverfahren kommt beispielsweise dann zum Einsatz, wenn es sich bei der Welle um eine Vollwelle handelt, deren Wellengrundkörper also aus einem Vollmaterial besteht.

Um nun den Bearbeitungsaufwand einer solchen Welle zu verringern, sind auch bereits sogenannte gebaute Wellen bekannt geworden, bei denen der Wellenkörper aus einem beispielsweise hohlen, rohrstückförmigen Grundkörper besteht und die zur Funktion der Welle erforderlichen Bauteile, wie beispielsweise Nocken, Zahnräder und dergleichen axial auf die Welle aufgeschoben und dann dort befestigt werden. Zur Lagerung einer solchen Welle beispielsweise im Zylinderkopf einer Brennkraftmaschine können Gleitlager oder Wälzlager eingesetzt werden, wobei letztere beispielsweise den Vorteil besitzen, weniger Anforderungen an die Lagerschmierung zu stellen und geringe Reibleistung zu erzeugen.

Wird nun eine solche gebaute Welle mit Wälzlagern versehen, so benötigt diese von Wälzlagern gebildete Stützstelle auch zwischen den Anbindungsflächen für die Funktionsbauteile in der Form beispielsweise der Nocken. Im Bereich der Anbindungsflächen besitzt die gebaute Welle einen Wellendurchmesser, der größer ist als der Wellengrunddurchmesser, so dass sich also Wellenabsätze einstellen. Diese Wellenabsätze können nun einen größeren Durchmesser besitzen als der zur Aufnahme der Wälzlager vorgesehene Bereich der Welle mit der Wälzkörperlaufbahn. Es stellt sich also die Problematik ein, das Wälzlager an einer Stelle der Welle anordnen zu müssen, die einen kleineren Durchmesser besitzt, als benachbarte Wellenabsätze der Welle.

Um nun ein Wälzlager an einer solchen Stelle zwischen zwei Wellenabsätzen montieren zu können, deren Durchmesser größer sind als der Durchmesser der Wälzlagerlaufbahn, ist es bekannt geworden, ein Wälzlager an der Wälzlagertaufbahn anzuordnen, welches einen geteilten Lageraußenring und einen geteilten oder geschlitzten Lagerkäfig aufweist. Ein solcher Lagerkäfig kann dann gleichsam auf die Wälzkörperlaufbahn aufgeklipst werden. Ein solches Wälzlager weist aber den Nachteil einer verringerten dynamischen und statischen Steifigkeit des geschlitzten oder geteilten Käfigs auf. Zudem führen die am Lageraußenring vorhandenen Trennstellen zu Schwachstellen der Laufbahn mit stark reduzierter Tragfähigkeit Damit der Lagerkäfig während des Laufs der Welle keine wesentlichen axialen Verlagerungen relativ zum Lageraußenring erfährt, sind zusätzliche axiale Führungsmittel für den Käfig erforderlich und auch weitere Bauteile als Axialanlaufflächen nötig.

Anhand der WO 02/055257 A1 ist ein Verfahren zur Herstellung einer gebauten Welle bekannt geworden, bei der es sich um eine Nockenwelle handeln kann. Diese weist einen rohrstückförmigen hohlen Grundkörper auf, der zur Anordnung der Nocken gestreckt wird. Dieser Streckvorgang führt zu einer Verringerung des Grunddurchmessers des rohrstückförmigen Grundkörpers an der Stelle, an der der Nockenkörper befestigt werden soll. Nach dem Aufschieben des Nockens wird dann der Streckvorgang unterbrochen und die Hohlwelle nimmt ihren ursprünglichen Durchmesser wieder an, was dazu führt, dass die Nocke axial und drehfest an der Nockenwelle festgelegt ist. Wie eine solche gebaute Welle dann gelagert wird, ist nicht beschrieben.

Anhand der DE 198 31 333 A1 ist ein Verfahren zum Befestigen von Bauteilen auf einer Hohlwelle bekannt geworden. Bei diesem bekannten Verfahren werden mittels Aufweiten der Hohlwelle Abstützstellen geschaffen, an denen die Hohlwelle dann zu deren späterem Einsatz gelagert werden soll.

Aus der Druckschrift WO 03/027446 A1 sind eine Nockenwelle, die in Gleitlagerböcken eines Zylinderkopfes gelagert ist, und ein Verfahren zur Herstellung einer solchen Nockenwelle bekannt geworden.

Anhand der WO 01/12956 A1 ist ein Verfahren zur Herstellung einer gebauten Nockenwelle und eine Vorrichtung zur Durchführung des Verfahrens bekannt geworden. Die hier auf die Hohlwelle aufgebrachten Nocken besitzen eine Schmiermittelnut, in die während des Aufschiebens der Nocke auf die Welle Schmiermittel eingetragen wird, so dass die Innenfläche der Innenbohrung der Nocke während des Aufschiebevorgangs geschmiert wird und die Nocke mit verringerter Reibung axial auf die Hohlwelle aufgeschoben werden kann.

Anhand der DE OS 2318 341 ist ein zur Aufnahme radialer Lagerbelastungen ausgebildetes Wälzlager bekannt geworden. Dieses bekannte Wälzlager besitzt einen einteiligen Lagerkäfig mit Rastnasen, die in eine Sicherungsnut einrasten können. Hierbei handelt es sich um ein Wälzlager ähnlich einem Nadelkranz ohne einen Lageraußenring. Die am Lagerkäfig des bekannten Lagers vorgesehenen Rastnasen greifen in Nuten der Welle oder eines Gehäusekörpers ein und dienen der axialen Fixierung des Lagerkäfigs.

Aus der DE 2 318 341 ist ein Wälzlager bekannt mit einem Wälzkörper führenden Lagerkäfig mit am Lagerkäfig angeordneten, radial nach außen vorstehenden Sicherungsmitteln die eine axiale Lagesicherung des Lagerkäfigs relativ zu einem anliegenden Bauteil herbeiführen, indem die Sicherungsmittel in Ausnehmungen im anliegenden Bauteil eingerastet werden.

Anhand der DE 199 26 406 A1 ist eine Lagerung einer Welle mit geteilten Wälzlagern bekannt geworden. Das bekannte Wälzlager besitzt einen geteilten Außenring mit zwei Lagerringhalbschalen, die von einem geschlitzten Ring überspannt werden, der ein Auseinanderfallen der beiden Halbschalen verhindert.

Auch anhand der WO 00/19117 ist eine Lagerung einer Welle mit geteilten Wälzlagern bekannt geworden. Auch die hier beschriebenen Lageraußenringhalbschalen werden von einem geschlitzten Ring umspannt, um zusammengehalten zu werden.

Schließlich ist anhand der DE 10 2004 021 646 A1 eine Verstellwelle eines hubvariablen Ventiltriebs bekannt geworden. Bei dieser bekannten Welle handelt es sich um eine aus einem hohlen rohrstückförmigen Grundkörper gebildete Welle, die Wälzlager besitzen kann, die sich mittels an an dem Grundkörper angeordneten Exzentemocken abstützenden Distanzhaltern am Wellenkörper positionieren lassen. Bei den verwendeten Lagern handelt es sich um Nadellager mit einem einteiligen Lageraußenring, der keinen Stoß mehr aufweist, wie dies bei mehrteiligen Lagerschalen der Fall ist.

Aus der Druckschrift US 3,975,066 ist ein Wälzlager bekannt geworden, mit einem Lagerinnenring, einem Lageraußenring und einem davon trennbaren, Walzkörper führenden Lagerkäfig, mit am Lagerkäfig angeordneten, radial nach außen vorstehenden Sicherungsmitteln, die eine axiale Lagesicherung des Lageraußenrings und Lagerkäfigs relativ zueinander herbeiführen, wobei die Sicherungsmittel zur axialen Lagesicherung in eine Nut im Lageraußenring eingerastet werden.

Aus der JP 2006132623 ist ein Verfahren zur Montage eines einen Lagerinnenring und einen Lagerkäfig aufweisenden Wälzlagers bekannt, wobei der Lagerinnenring mindestens einen Absatz mit einem Durchmesser aufweist, der größer ist als der Durchmesser der Wälzkörperlaufbahn. Nach diesem Verfahren wird der Lagerkäfig über den Absatz des Lagerinnenrings hinweg zur Wälzkörperlaufbahn mit einer radial nach außen gerichteten Bewegung der Wälzkörper innerhalb des Lagerkäfigs im Bereich des Absatzes bewegt, und es wird eine axiale Lagesicherung zwischen Lagerinnenring und Lagerkäfig mittels am Lagerinnenring vorgesehener Sicherungsmittel herbeigeführt.

Aus der JP 2005172059 ist ein Verfahren zur Montage eines einen Lageraußenring und einen Lagerkäfig aufweisenden Wälzlagers bekannt, wobei eine axiale Lagesicherung zwischen Lageraußenring und Lagerkäfig mittels am Lagerkäfig vorgesehener, selbsttätig wirkender Sicherungsmittel herbeigeführt wird.

Ausgehend hiervon liegt der vorliegenden Erfindung nunmehr die Aufgabe zugrunde, ein Verfahren zu schaffen, mit dem ein ungeteiltes Wälzlager auf einer Welle angeordnet werden kann zwischen Wellenabsätzen, die einen Durchmesser besitzen, der größer ist als der Durchmesser der Wälzkörperlaufbahn und die Welle vor ihrer Anordnung an ihrem Bestimmungsort vollständig vormontiert werden kann, ohne dass sich die montierten Wälzlager von ihrem bestimmungsgemäßen Ort an der Welle lösen können. Auch soll das Verfahren zur Herstellung einer gebauten Welle verwendet werden und die Erfindung soll ein Wälzlager schaffen, welches sich zur Anordnung an der Welle besonders eignet. Schließlich soll auch noch eine nach dem erfindungsgemäßen Verfahren gebildete Welle geschaffen werden.

Die Erfindung weist nun zur Lösung dieser Aufgabe hinsichtlich des Verfahrens die im Anspruch 1 oder 2 angegebenen Merkmale auf. Vorteilhafte Ausgestaltungen hiervon sind in den weiteren Ansprüchen beschrieben. Auch schafft die Erfindung hinsichtlich der gebauten Welle ein Verwendungsverfahren nach dem Anspruch 6 und ein Wälzlager mit den Merkmalen des Anspruchs 7. Vorteilhafte Ausgestaltungen des Wälzlagers sind in den weiteren Ansprüchen beschrieben. Schließlich schafft die Erfindung auch eine Welle mit den Merkmalen des Anspruchs 13, wobei eine vorteilhafte Ausführungsform hiervon im weiteren Anspruch beschrieben ist.

Die Erfindung sieht nun ein Verfahren der Anordnung eines einem ungeteilten Lageraußenring und einen ungeteilten Lagerkäfig aufweisenden Wälzlagers an einer Welle vor, die mindestens einen Wellenabsatz mit einem Durchmesser aufweist, der größer ist als der Durchmesser der Wälzkörperlaufbahn, wobei nach der Erfindung das Bewegen des vom Lageraußenring getrennten Lagerkäfigs über den Wellenabsatz hinweg zur Wälzkörperlaufbahn mit einer radial nach außen gerichteten Bewegung der Wälzkörper innerhalb des Lagerkäfigs im Bereich des Wellenabsatzes vorgesehen ist und das Bewegen des Lageraußenrings in Achsrichtung der Welle über den Lagerkäfig zur Aufnahme des Lagerkäfigs in einer Öffnung des Lageraußenrings und das Herstellen einer axialen Lagesicherung zwischen dem Lageraußenring und dem Lagerkäfig mittels am Lagerkäfig vorgesehener selbsttätig wirkender Sicherungsmittel.

Die Erfindung zeichnet sich nun dadurch aus, dass ein Wälzlager mit einem ungeteilten, das heißt also geschlossenen Lageraußenring und einem ungeteilten, das heißt also geschlossenen und auch nicht geschlitzten Lagerkäfig auf einer Wälzkörperlaufbahn angeordnet wird, die einen kleineren Durchmesser besitzt, als ein Wellenabsatz, über den der Lagerkäfig bei der Anordnung des Lagerkäfigs an der Wälzkörperlaufbahn hinwegbewegt wird. Während dieser Bewegung über den Wellenabsatz mit größerem Durchmesser weichen die im Lagerkäfig geführten Wälzkörper in der Form beispielsweise von Nadeln oder anderer Wälzkörper radial nach außen gerichtet so weit aus, dass der Lagerkäfig über den Wellenabsatz wegbewegt werden kann. Nach der erfolgten Montage des Lagerkäfigs an der Wälzkörperlaufbahn wird dann der Lageraußenring in Achsrichtung der Welle über den Lagerkäfig hinwegbewegt, wo dass der Lagerkäfig in der Öffnung des Lageraußenrings aufgenommen wird. Nachdem der Lageraußenring auf diese Weise am Lagerkäfig angeordnet worden ist, sorgen am Lagerkäfig vorgesehene selbsttätig wirkende Sicherungsmittel für eine axiale Lagesicherung des Lageraußenrings am Lagerkäfig und umgekehrt. Mit dem erfindungsgemäßen Verfahren können beispielsweise Wälzlager an einer gebauten Welle angeordnet werden, die auf diese Weise vor ihrer Montage am eigentlichen Bestimmungsort, beispielsweise einem Zylinderkopf einer Brennkraftmaschine, vollständig vormontiert werden kann und als Ganzes dann in den Zylinderkopf eingebracht werden kann.

Nach dem erfindungsgemäßen Verfahren kann also beispielsweise eine Nockenwelle einer Brennkraftmaschine oder eine Verstellwelle eines variablen Ventiltriebs mit Wälzlagern versehen werden und dann nach der Montage weiterer Funktionsbauteile, wie beispielsweise Nocken oder Zahnräder oder Kettenräder oder dergleichen, in den Zylinderkopf einer Brennkraftmaschine eingebracht werden.

Nach dem vorstehend beschriebenen Verfahren kann also beispielsweise eine vollständig vormontierte Welle geschaffen werden, die dann an ihrem späteren Bestimmungsort angebracht wird.

Nach einer Ausführungsform gemäß der vorliegenden Erfindung ist es auch vorgesehen, den vom Lageraußenring getrennten Lagerkäfig über den Wellenabsatz hinweg zur Wälzkörperlaufbahn mit einer radial nach außen gerichteten Bewegung der Wälzkörper innerhalb des Lagerkäfigs im Bereich des Wellenabsatzes zu bewegen und dann die Welle zusammen mit dem Lagerkäfig durch eine Öffnung des Lageraußenrings hindurchzubewegen derart, dass der Lagerkäfig in der Öffnung aufgenommen ist und sodann eine axiale Lagesicherung zwischen dem Lageraußenring und dem Lagerkäfig mittels am Lagerkäfig vorgesehener selbsttätig wirkender Sicherungsmittel herbeigeführt wird.

Nach dieser Ausführungsform können also beispielsweise zur späteren Aufnahme der Welle und der Lagerkäfige vorgesehene Lageraußenringe an einem Lagerstuhl vorab festgelegt werden und dann die nach dem erfindungsgemäßen Verfahren mit Wälzkörpern und einem Lagerkäfig versehene Welle durch eine Öffnung eines Lageraußenrings derart hindurchbewegt werden, dass der Lagerkäfig in der Öffnung aufgenommen wird. Bei dieser Bewegung wird dann über am Lagerkäfig vorgesehene selbsttätig wirkende Sicherungsmittel eine axiale Lagesicherung zwischen dem Lageraußenring und dem Lagerkäfig herbeigeführt.

Um nun die Lagesicherung zwischen dem Lageraußenring und dem Lagerkäfig herbeiführen zu können, werden am Lagerkäfig einstückig vorgesehene Federn mit mindestens einer Stirnseite des Lageraußenrings in Anlage gebracht. Findet daher zur Montage des Lageraußenrings und des Lagerkäfigs aneinander eine axiale Relativbewegung der genannten Bauteile statt, so können diese am Lagerkäfig einstückig vorgesehenen Federn während der axialen Relativbewegung ausweichen und kommen dann, nachdem der Lageraußenring und der Lagerkäfig ihre bestimmungsgemäße Relativposition zueinander eingenommen haben, mit der Stirnseite des Lageraußenrings in Kontakt und führen so zu einer relativen Lagesicherung zwischen Lageraußenring und Lagerkäfig.

Nach einer Weiterbildung der Erfindung ist es vorgesehen, dass zur Lagesicherung am Lagerkäfig vorgesehene Federn mit an der Welle vorgesehene Vertiefungen oder Absätzen in Eingriff gebracht werden. Hierdurch kann der Lagerkäfig relativ zur Welle axial lagegesichert werden, was dann nach der Anordnung des Lageraußenrings am Lagerkäfig auch zu einer axialen Lagesicherung des Lageraußenrings relativ zur Welle führt.

Vorstehend wurde es erwähnt, dass zur Lagesicherung des Lageraußenrings und des Lagerkäfigs relativ zueinander Federn mit mindestens einer Stirnseite des Lageraußenrings in Kontakt gebracht werden. Daneben ist es nach einer Weiterbildung der Erfindung aber auch vorgesehen, dass zur Lagesicherung an beiden Stirnseiten des Lagerkäfigs einstückig vorgesehene und sich weitgehend in Achsrichtung des Lagerkäfigs erstreckende Borde an an der Welle vorgesehenen Absätzen in Anlage gebracht werden derart, dass der Lageraußenrings mittels der Sicherungsmittel, insbesondere der Federn, relativ zum Lagerkäfig und zur Welle festgelegt wird.

Dadurch wird erreicht, dass auch in einem solchen Fall, dass die Wälzkörperlaufbahn innerhalb von ansonsten benachbarter Absätze an der Welle vorgesehen ist, diese Absätze dazu verwendet werden, den Lagerkäfig relativ zur Welle festzulegen, indem an den Stirnseiten des Lagerkäfigs einstückig vorgesehene und sich weitgehend in Achsrichtung des Lagerkäfigs erstreckende Borde mit diesen an der Welle vorgesehenen Absätzen in Anlage gebracht werden. Nach der Anordnung des Lageraußenrings am Lagerkäfig wird dieser mittels der am Lagerkäfig vorgesehenen selbsttätigen wirkenden Sicherungsmittel in der Form beispielsweise der vorstehend bereits erwähnten Federn, relativ zum Lagerkäfig und zur Welle lagegesichert. Bei den Absätzen kann es sich beispielsweise um Nocken oder auch andere Funktionsbauteile der Welle handeln.

Das erfindungsgemäße Verfahren kann nun beispielsweise dazu verwendet werden, eine gebaute Welle, wie sie vorstehend bereits erläutert worden ist, herzustellen, indem mindestens ein Wälzlager mit ungeteiltem Lagerkäfig und ungeteiltem Lageraußenring zwischen beabstandet angeordneten Absätzen zur Aufnahme von Nocken angeordnet wird. Die Welle kann dabei beispielsweise aus einem rohrstückförmigen hohlen oder vollen Grundkörper gebildet werden. Damit ist es möglich, an dem Grundkörper mit hoher dynamischer und statischer Steifigkeit ausgebildete Wälzlager anzuordnen, die aufgrund des Wegfalls einer Trennstelle am Außenring und Lagerkäfig auch entsprechend hohe Tragfähigkeiten im Lageraußenringbereich und Steifigkeiten besitzen und eine zusätzliche axiale Führung des Lagerkäfigs wegfällt, da durch die selbsttätig wirkenden Sicherungsmittel und/oder am Lagerkäfig vorgesehene Festborde eine Lagesicherung zwischen dem Lageraußenring und dem Lagerkäfig erreicht wird und auf diese Weise axiale Führungsmittel in der Form beispielsweise von Axialanlaufflächen oder dergleichen weggelassen werden können.

Die Erfindung sieht nun auch ein Wälzlager vor, welches sich insbesondere zur Durchführung des vorstehend erwähnten Verfahrens eignet und einen ungeteilten Lageraußenring und einen davon trennbaren, Wälzkörper führenden ungeteilten Lagerkäfig besitzt und Sicherungsmittel aufweist, die bei der Montage des Lageraußenrings und des Lagerkäfigs eine Lagesicherung des Lageraußenrings und Lagerkäfigs relativ zueinander selbsttätig herbeiführen. Wird ein vom Lageraußenring getrennter Lagerkäfig mit dem Lageraußenring verbunden, indem beispielsweise der Lagerkäfig in die Mittenöffnung des Lageraußenrings eingeschoben wird, so sorgen Sicherungsmittel selbsttätig dafür dass, nachdem der Lageraußenring und der Lagerkäfig ihre bestimmungsgemäße Relativposition zueinander eingenommen haben, zwischen dem Lageraußenring und dem Lagerkäfig die bestimmungsgemäße Position beibehalten wird.

Die Sicherungsmittel sind am Lagerkäfig angeordnete Federn, die bei der Anordnung des Lageraußenrings am Lagerkäfig in Richtung radial nach innen gerichtet ausweichen und nach der Anordnung des Lagerkäfigs in der Öffnung des Lageraußenrings mit einer Stirnfläche des Lagerkäfigs in Kontakt gebracht werden können. Diese Sicherungsmittel können an beiden Stimseitenbereichen des Lagerkäfigs vorgesehene Federn sein. Wird dann der Lageraußenring über den Lagerkäfig hinweg geschoben, so kommt eine Stirnseite des Lageraußenrings mit den an einem stirnseitigen Ende des Lagerkäfigs vorgesehenen Federn in Kontakt, während die an der anderen Stirnseite des Lagerkäfigs vorgesehenen Federn nach ihrer nach radial innen gerichteten Ausweichbewegung während der Montage des Lageraußenrings am Lagerkäfig wieder in Richtung nach radial außen ausfedern und mit einer Stirnfläche des Lagerkäfigs in Kontakt kommen.

Nach einer Weiterbildung des erfindungsgemäßen Wälzlagers kann am Lagerkäfig auch mindestens ein sich nach radial außen gerichtet erstreckender Bund vorgesehen sein, an dem der Lageraußenring in Anlage gebracht wird. Bei der vorstehend erwähnten Ausführungsform mit an beiden Stirnflächen des Lagerkäfigs vorgesehenen Federn ist eine Montage des Lageraußenrings relativ zum Lagerkäfig von beiden Seiten her möglich, es liegt also keine bevorzugte Montagerichtung vor, während bei der Ausbildung des Lagerkäfigs mit einem an beispielsweise einer Stirnseite vorgesehenen radial sich nach außen gerichtet erstreckenden Bund, an dem dann an der gegenüberliegenden Stirnfläche Federn vorgesehen sein können, eine bevorzugte Montagerichtung des Lageraußenrings relativ zum Lagerkäfig vorgesehen ist.

Die Erfindung sieht nun nach einer Weiterbildung vor, dass die Sicherungsmittel sich in Längsrichtung des Lagerkäfigs erstreckende erste Federn sind, die im Raum zwischen Wälzkörper aufnehmenden Ausnehmungen des Lagerkäfigs angeordnet sind und am freien Endbereich sich aus der Ebene der Ausnehmungen heraus erstreckende Federlaschen besitzen, die mit der Stirnfläche des Lagerkäfigs in Kontakt gebracht werden können. Wird nun der Lageraußenring auf den Lagerkäfig aufgeschoben, so kommt der Lageraußenring zunächst mit einer Stirnkante mit den Federlaschen des Lagerkäfigs in Kontakt, die daraufhin vom Lagerkäfig aus betrachtet in Richtung nach radial innen gerichtet ausweichen, bis der Lageraußenring an der den Federlaschen gegenüberliegenden Stirnseite des Lagerkäfigs mit einem dort beispielsweise vorgesehenen sich radial nach außen gerichtet erstreckenden Bund in Kontakt kommen oder an auch an dieser Stirnseite angeordneten Federn zur Anlage kommen. Dies führt dazu, dass die Federlaschen ihre ursprüngliche Position wieder einnehmen und über die Stirnfläche des Lageraußenrings in Richtung nach radial außen gerichtet ausfedern und dann an der Stirnfläche des Lageraußenrings anliegen oder eine Stellung in geringem Abstand zu dieser einnehmen. Die ersten Federn weisen also eine sich weitgehend in Axialrichtung der Ausnehmungen beziehungsweise des Lagerkäfigs erstreckende Konfiguration auf.

Nach einer Weiterbildung der Erfindung können die Sicherungsmittel aber auch sich in Umfangsrichtung des Lagerkäfigs erstreckende zweite Federn sein, die sich am freien Endbereich aus der Ebene der Ausnehmungen heraus erstreckende Federlaschen besitzen, die mit der Stirnfläche des Lageraußenrings in Kontakt gebracht werden können. Wird ein Lageraußenring auf einen so gebildeten Lagerkäfig aufgeschoben, so federn die sich in Umfangsrichtung des Lagerkäfigs erstreckende zweite Federn in Richtung nach radial innen gerichtet weg und fedem dann, wenn der Lageraußenring vollständig auf den Lagerkäfig aufgeschoben worden ist, radial nach außen gerichtet wieder aus und sorgen auf diese Weise dafür, dass der Lageraußenring bei einer zur Bewegungsrichtung des Lageraußenrings bei der Montage am Lagerkäfig entgegen gesetzten Bewegungsrichtung vom Lagerkäfig nicht mehr abgezogen werden kann, ohne dass die Federn beispielsweise mittels eines Werkzeuges aktiv in Richtung nach radial innen gedrückt werden.

Um nun die Montage des Lageraußenrings relativ zum Lagerkäfig und seinen Fedem zu erleichtern, ist es nach einer Weiterbildung der Erfindung vorgesehen, dass die zweiten Federn in einem Winkel zur Umfangsrichtung von 0 Grad bis 90 Grad, insbesondere in einem Winkel von 20 Grad bis 45 Grad angeordnet sind. Verlaufen nämlich die zweiten Federn in einem Winkel zur Umfangsrichtung des Lagerkäfigs, so führt die Montage des Lageraußenrings am Lagerkäfig beziehungsweise die Montage des Lagerkäfigs am Lageraußenring dazu, dass eine radial innen liegende Umlaufkante an der Kontakt aufnehmenden Stirnfläche des Lageraußenrings mit einer in Einschubrichtung des Lagerkäfigs in die innen liegende Öffnung des Lageraußenrings vordere obere Kante der zweiten Federn als erstes in Kontakt kommt und auf diese Weise eine radial nach innen gerichtete Federbewegung der zweiten Federn erleichtert wird und es nicht zu einem ebenen Aufliegen einer Stirnfläche der zweiten Federn an der Stirnfläche des Lageraußenrings kommen kann, woraufhin die zweiten Federn am Lagerkäfig in Richtung nach radial innen gerichtet beaufschlagt werden müssten.

Wie es vorstehend bereits erwähnt wurde, zeichnet sich das erfindungsgemäße Verfahren unter anderem dadurch aus, dass eine mit Wälzlagern versehene Welle vollständig vormontiert werden kann, bevor sie an ihrem bestimmungsgemäßen Einsatzort angebracht wird. Hierbei werden dann die Wälzlager in entsprechende Lagersitzaufnahmen oder Lagerstühle angeordnet. Um nun auch eine Kostenverringerung bei der Bearbeitung der Lagerstühle zu erreichen dadurch, dass nur die Innenbohrung des Lagerstuhls bearbeitet werden muss, während außerhalb der Innenbohrung liegende äußere Anlaufflächen oder dergleichen nicht erforderlich sind, ist es nach einer Weiterbildung der Erfindung vorgesehen, dass der Lageraußenring im Bereich beider Stirnflächen einen sich in Richtung nach radial außen gerichtet erstreckenden Umlaufbund besitzt, der mit Stirnflächen eines Lagersitzes in Anlage gebracht werden kann und am Lagerkäfig vorgesehene Sicherungsmittel in der Form von Federn und/oder einem Bund oder Bundsegmenten mit dem Umlaufbund zur Lagesicherung des Lagerkäfigs relativ zum Lageraußenring in Anlage gebracht wird. Der Lageraußenring liegt dann mit seinen an beiden Stimflächen vorgesehenen und sich in Richtung nach radial außen gerichtet erstreckendem Umlaufbund an einer Stirnfläche des Lagersitzes an, die nicht weiter bearbeitet werden muss, sondern beispielsweise während eines Gießvorgangs des Lagersitzes fertig gegossen werden kann.

Der Lagerkäfig besitzt Sicherungsmittel in der Form von beispielsweise Federn oder dergleichen, die dann an dem Umlaufbund in Anlage gebracht werden können, was zur Lagesicherung des Lagerkäfigs relativ zum Lageraußenring führt. Der Lageraußenring wiederum ist über den Kontakt seiner an beiden Stirnflächen vorgesehenen Umlaufbunde mit den Stirnflächen des Lagersitzes lagegesichert und sorgt auf diese Weise auch dafür, dass der Lagerkäfig eine Lagesicherung relativ zum Lageraußenring erfährt, ohne beispielsweise mittels Abstandshaltern oder dergleichen an benachbarten Wellenbunden oder dergleichen abgestützt werden zu müssen.

Die Erfindung sieht nun auch eine Welle vor, bei der es sich um eine Verstellwelle eines hubvariablen Ventiltriebs oder eine Nockenwelle einer Brennkraftmaschine handeln kann, die einen rohrstückförmigen hohlen oder vollen Grundkörper aufweist und mindestens ein Wälzlager besitzt, wie es vorstehend erläutert worden ist und mittels dem ebenfalls vorstehend beschriebenen erfindungsgemäßen Verfahren an der Welle angeordnet werden kann.

Die Erfindung schafft nun ein Verfahren, mit dem ein Wälzlager mit einem ungeteilten Lageraußenring und einem ungeteilten Lagerkäfig an einer Welle montiert werden kann und zwar an einer Wälzkörperlaufbahn, die einen kleineren Durchmesser besitzt, als ein in Montagerichtung des Wälzlagers an der Welle vor der Wälzkörperlaufbahn liegender Wellenabsatz. Die Montage des Lagerkäfigs erfolgt dabei getrennt von dem Außenring, so dass die in den Lagerkäfigtaschen montierten Wälzkörper radial nach außen gerichtet bewegt werden können, ohne dabei eine Beschädigung zu erfahren. Befindet sich der Lagerkäfig dann an seiner bestimmungsgemäßen Position, also der Wälzkörperlaufbahn an der Welle angeordnet, so wird in einem nächsten Arbeitsschritt der Lageraußenring montiert. Dabei federn die am Lagerkäfig vorgesehenen Federn oder Federlaschen ein, wobei dies für beide nach der Erfindung vorgesehene Ausführungsformen gilt, nämlich einer Ausführungsform, bei der die Welle vollständig vormontiert wird und zu diesem Zweck die Lageraußenringe an den auf der Welle angeordneten Lagerkäfigen montiert werden oder auch bei der Variante, nach der beispielsweise ein Lagerau-βenring in einem Gehäuse oder einem Lagersitz des Gehäuses vorab montiert wird und dann die Welle mit einem daran angeordneten Lagerkäfig in die Öffnung des Lageraußenrings eingeschoben wird, bis der Lagerkäfig seine bestimmungsgemäße Position innerhalb der Öffnung des Lageraußenrings eingenommen hat. In beiden Fällen können die an dem Lagerkäfig vorgesehenen Federn oder Federlaschen radial nach innen gerichtet ausweichen und federn dann, wenn der Lagerkäfig seine bestimmungsgemäße Position relativ zum Lageraußenring eingenommen hat, wieder radial nach außen gerichtet aus, so dass die Federn mit einer Stirnfläche des Lageraußenrings in Kontakt gebracht werden können, um auf diese Weise eine Lagesicherung des Lageraußenrings und des Lagerkäfigs relativ zueinander herbeizuführen. Auch ist es nach der Erfindung vorgesehen, Lagerkäfige mit Lageraußenringen nach dem Verfahren anzuordnen und einen Lagerau-βenring bereits in einem Gehäuse oder einem Lagerstuhl festzulegen und dann die vormontierte Welle mit einem daran angeordneten Lagerkäfig, an dem noch kein Lageraußenring angeordnet worden ist, in den vorab festgelegten Lagerau-βenring einzubringen, um auf diese Weise die Welle mit allen Lagerstellen am bestimmungsgemäßen Einsatzort festzulegen.

Die Erfindung wird nunmehr im Folgenden anhand der Zeichnung näher erläutert. Diese zeigt in:
Fig. 1 eine schematische und teilweise geschnittene Darstellung einer gebauten Welle in der Form einer Nockenwelle mit einem an einer Wälzkörperlaufbahn angeordneten Lagerkäfig mit Wälzkörpern und einem daran in Montage befindlichen Lageraußenring;
Fig. 2 eine Darstellung ähnlich Fig. 1, bei der der Lageraußenring bereits fertig montiert worden ist;
Fig. 3A eine vergrößerte Darstellung eines Ausschnitts eines Lagerkäfigs eines Wälzlagers nach der vorliegenden Erfindung;
Fig. 3B eine ähnliche Darstellung eines modifizierten Lagerkäfigs mit einem in Axiallängsrichtung des Lagerkäfigs geringerer Breite;
Fig. 4 eine Darstellung ähnlich Fig. 1, die eine modifizierte Ausführungsform eines Wälzlagers nach der vorliegenden Erfindung in einer Stellung während der Anordnung des Lageraußenrings am Lagerkäfig zeigt;
Fig. 5 eine Darstellung ähnlich Fig. 4, bei der sich der Lageraußenring und der Lagerkäfig in einer montierten Stellung relativ zueinander befinden;
Fig. 6 eine vergrößerte Ausschnittsdarstellung eines Lagerkäfigs gemäß der modifizierten Ausführungsform;
Fig. 7A einen Ausschnitt eines Lagerkäfigs mit unterschiedlicher Ausrichtung zweiter Federn relativ zur Umfangsrichtung des Lagerkäfigs;
Fig. 7B eine vergrößerte Darstellung einer zweiten Feder des Lagerkäfigs gemäß Fig. 7A;
Fig. 8 eine teilweise geschnittene Darstellung eines Wälzlagers gemäß einer weiteren modifizierten Ausführungsform in einer Stellung, bei der der Lageraußenring relativ zum Lagerkäfig bereits montiert worden ist;
Fig. 9 eine perspektivische Darstellung eines Ausschnitts des Lagerkäfigs gemäß Fig. 8;
Fig. 10 eine teilweise geschnittene Darstellung eines an einer Nockenwelle angeordneten Wälzlagers mit Lagerkäfig und Lageraußenring, bei der ein Lagerdeckel aufgesetzt wird;
Fig. 11 eine teilweise geschnittene Darstellung eines modifizierten Lagerkäfigs mit Lageraußenring in montierter Stellung; und
Fig. 12 eine Darstellung eines Ausschnitts einer Nockenwelle mit einem Wälzlager nach einer modifizierten Ausführungsform, die die Nockenwelle mit dem Lager in einen Lagerstuhl eines Zylinderkopfs einer Brennkraftmaschine eingesetzten Darstellung.

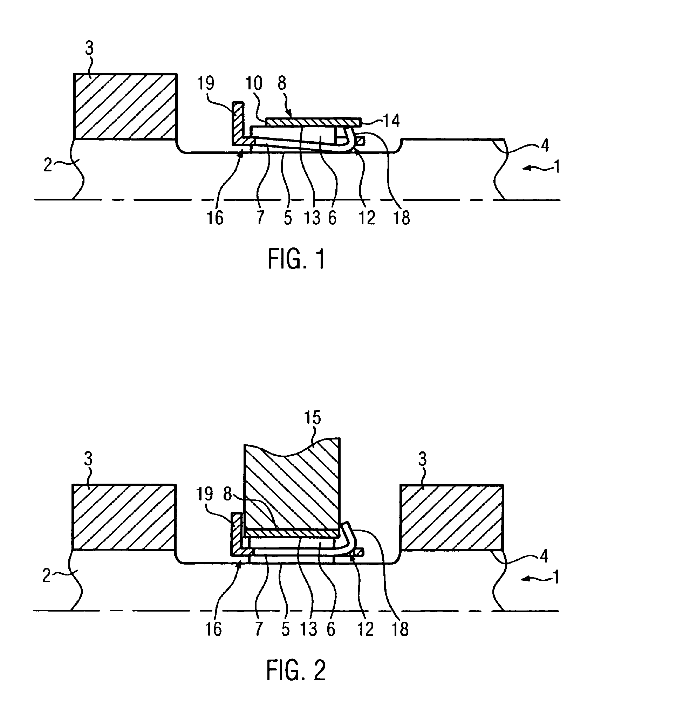

Fig. 1 der Zeichnung zeigt nun in einer schematischen und teilweise geschnittenen Darstellung einen Ausschnitt einer Nockenwelle 1 mit einer an einem Wellenabsatz 2 angeordneten Nocke 3.

An dem, dem Wellenabsatz 2 in Axiallängsrichtung der Nockenwelle 1 gegenüber liegenden Ende des in Fig. 1 dargestellten Ausschnitts der Nockenwelle 1 besitzt diese einen dem Wellenabsatz 2 entsprechenden Wellenabsatz 4, der zur Aufnahme einer bei der gewählten Darstellung noch nicht angeordneten weiteren Nocke dient. Zwischen den beiden Wellenabsätzen 2 und 4 ist eine Wälzkörperlaufbahn 5 vorgesehen, an der Wälzkörper 6 abrollen können, wobei zu diesem Zweck die Wälzkörperlaufbahn beispielsweise gehärtet und geschliffen fertig gearbeitet sein kann.

Wie es ohne weiteres ersichtlich ist, besitzt die Nockenwelle 1 im Bereich der Wälzkörperlaufbahn 5 einen Durchmesser, der kleiner ist als der Durchmesser im Bereich der Wellenabsätze 2 und 4.

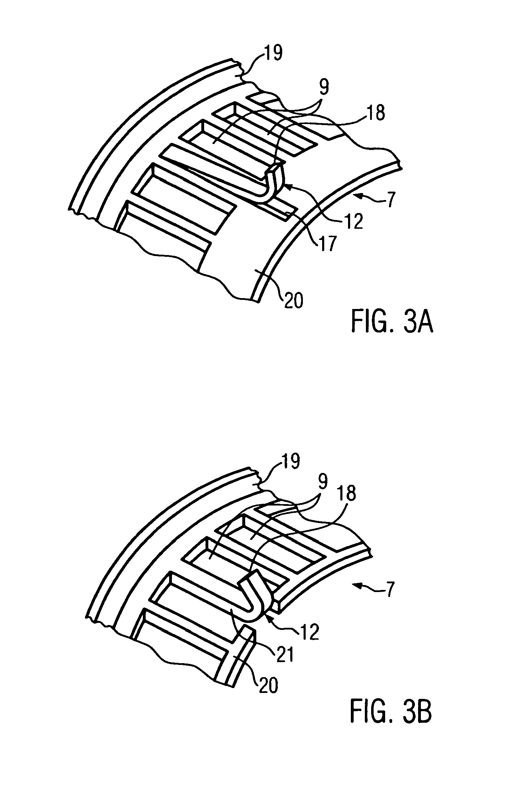

Um nun im Bereich der Wälzkörperlaufbahn 5 ein Wälzlager mit einem ungeteilten Lagerkäfig 7 und einem ungeteilten Lageraußenring 8 anbringen zu können, wird zunächst der vom Lageraußenring 8 getrennte Lagerkäfig 7 über den in der Zeichnungsebene rechten Wellenabsatz 4 hinweg zur Wälzkörperlaufbahn 5 bewegt. Zu diesem Zweck wird der Lagerkäfig 7 mit den Wälzkörpern 6 über den Wellenabsatz 4 geschoben, wobei während dieser Bewegung über den Wellenabsatz 4 hinweg die Wälzkörper 6 eine in Ausnehmungen 9 (siehe Fig. 3A) innerhalb des Lagerkäfigs 7 geführte Bewegung nach radial außen gerichtet ausführen, so dass sie bei der Bewegung über den Wellenabsatz 4 hinweg keine Beschädigung erfahren.

Nachdem der Lagerkäfig 7 zusammen mit den Wälzkörpern 6 über den Wellenabsatz 4 hinweg bewegt worden ist, bis er im Bereich der Wälzkörperlaufbahn 5 zu liegen kommt, wird dann der Lageraußenring 8 ebenfalls über den Wellenabsatz 4 in Achsrichtung der Nockenwelle 1 hinwegbewegt, bis er in den Bereich des Lagerkäfigs 7 gelangt. Dabei kommt eine Stirnseite 10 des Lageraußenrings 8 mit am Lagerkäfig 7 einstückig angeordneten selbsttätig wirkenden Sicherungsmitteln in der Form von ersten Federn 12 in Kontakt. Dies führt dazu, dass die ersten Fedem 12 vom Lagerkäfig 7 aus betrachtet in Richtung nach radial innen gerichtet wegfedern und der Lageraußenring 8 entlang seiner Innenumfangsfläche 13 über die ersten Federn 12 hinwegbewegt werden kann.

Haben nun der Lageraußenring 8 und der Lagerkäfig 7 ihre bestimmungsgemäße Position relativ zueinander erreicht, so federn die ersten Federn 12 wieder nach radial außen gerichtet aus und zwar so, dass sie an einer Stirnfläche 14 des Lageraußenrings 8 zur Anlage gebracht werden können, wenn zwischen dem Lageraußenring 8 und dem Lagerkäfig 7 eine in Axiallängsrichtung der Welle 1 gerichtete Bewegung vorliegt.

Fig. 2 der Zeichnung nun zeigt eine bestimmungsgemäße Einbausituation der Nockenwelle 1 mit zwei an der Nockenwelle 1 an den Wellenabsätzen 2, 4 angeordneten Nocken 3. Die Welle 1 befindet sich hier im Zylinderkopf einer Brennkraftmaschine angeordnet und zwar so, dass der Lageraußenring 8 in einem Lagerdeckel 15 und einem nicht näher dargestellten Lagerstuhlunterteil festgelegt worden ist. Die Nockenwelle 1 kann daher mit den Nocken 3 und dem den Lagerkäfig 7 und den Lageraußenring 8 sowie Wälzkörper 6 aufweisenden Wälzlager 16 vormontiert werden. Hierbei stellt sich aufgrund der am Lagerkäfig 7 vorgesehenen selbsttätig wirkenden Sicherungsmittel in der Form der ersten Federn 12 eine Lagesicherung zwischen dem Lageraußenring 8 und dem Lagerkäfig 7 ein.

Fig. 3A zeigt nun eine vergrößerte Darstellung eines Ausschnitts des Lagerkäfigs 7 nach Fig. 1 und 2. Wälzkörper 6 können in den Ausnehmungen 9 des Lagerkäfigs 7 aufgenommen werden. Bei der dargestellten Ausführungsform des Lagerkäfigs 7 ist zwischen zwei Ausnehmungen 9 eine weitere Ausnehmung 17 angeordnet, in der die mit dem Lagerkäfig 7 einstückig ausgebildete dargestellte erste Feder 12 angeordnet ist und zwar derart, dass die erste Feder 12 aus der Ausnehmung 17 heraus ausfedert, wenn die zweite Stirnfläche 14 das aus der Ebene des Lagerkäfigs 7 sich heraus erstreckende hakenförmige Ende 18 passiert hat. Befindet sich die Innenumfangsfläche 13 des Lageraußenrings 8 mit dem hakenförmigen Ende 18 in Kontakt, so führt dies zu der in Fig. 1 der Zeichnung dargestellten Konfiguration mit in der Ausnehmung 17 in einer eingefederten Stellung aufgenommenen ersten Feder 12. Federn 12 können dabei in Umfangsrichtung des Lagerkäfigs 7 verteilt vorgesehen sein.

Fig. 3A zeigt darüber hinaus einen am Lagerkäfig 7 angeordneten und einstückig damit ausgebildeten feststehenden umlaufenden Bord oder Bund 19, welcher der Lagesicherung des Lageraußenrings 8 und des Lagerkäfigs 7 relativ zueinander dient, wie dies in Fig. 1 und 2 der Zeichnung dargestellt ist.

Fig. 3B der Zeichnung nun zeigt eine modifizierte Ausführungsform eines Lagerkäfigs 7 mit einer in Axiallängsrichtung des Lagerkäfigs 7 geringeren Breite. Dies wird dadurch erreicht, dass der Bord 20, wie er in Fig. 3A dargestellt ist, bei der Ausführungsform nach Fig. 3B kürzer ausgestaltet wird. Zudem unterscheidet sich der Lagerkäfig nach Fig. 3B vom Lagerkäfig nach Fig. 3A dadurch, dass ein benachbarte Ausnehmungen 9 voneinander trennender Steg 21 gleichzeitig als erste Feder 12 ausgebildet ist. Die Funktionen der ersten Feder 12 nach Fig. 3A und 3B sind ansonsten gleich.

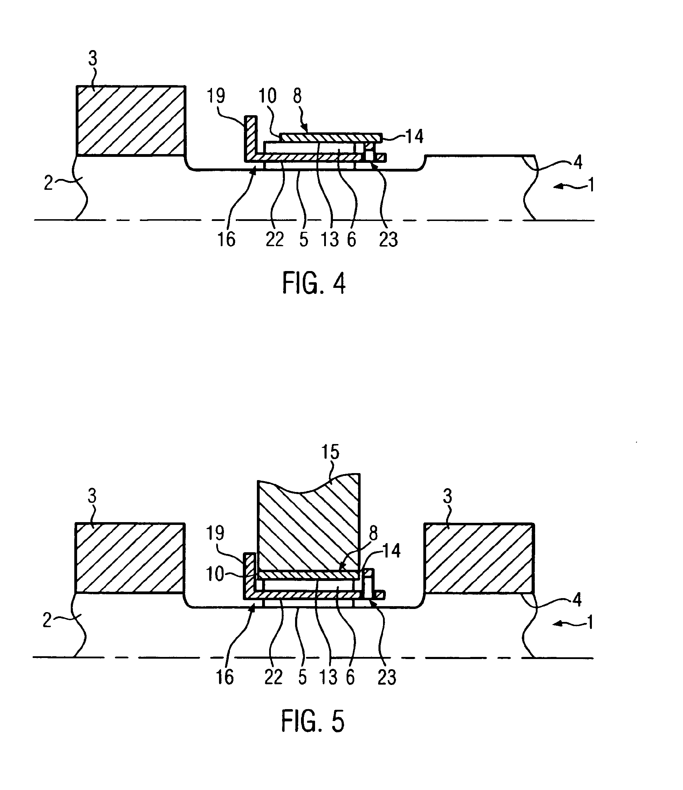

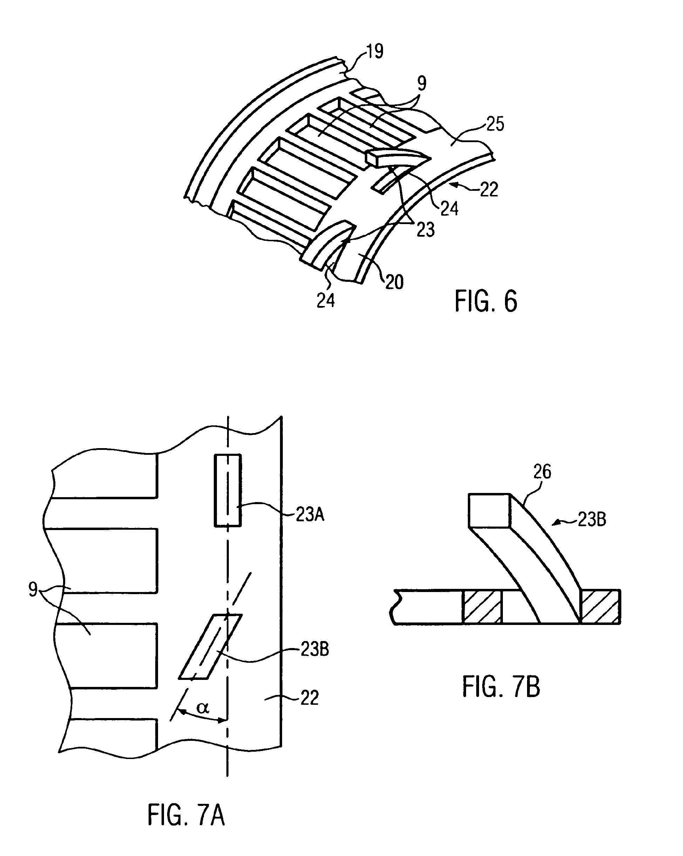

Fig. 4 der Zeichnung nun zeigt eine teilweise geschnittene und schematische Darstellung einer Nockenwelle 1 mit daran angeordnetem Wälzlager 16. Das Wälzlager 16 weist einen modifizierten Lagerkäfig 22 auf mit daran einstückig angeordneten zweiten Feder 23, die nachfolgend noch näher anhand von Fig. 7A und 7B erläutert werden.

In einer zur vorstehend in Verbindung mit Fig. 1 beschriebenen Vorgehensweise ähnlichen Weise wird zur Anordnung des Lagerkäfigs 22 an der Wälzlagerlaufbahn 5 der Lageraußenring 8 vom Lagerkäfig 22 getrennt und dieser dann unter einer radial nach außen gerichteten Bewegung der Wälzkörper 6 während der Bewegung des Lagerkäfigs 22 über den Wellenabsatz 4 hinweg in Richtung zur Wälzkörperlaufbahn 5 bewegt. Sodann wird der Lageraußenring 8 über den Lagerkäfig 22 geschoben, bis der Lagerkäfig 22 vollständig innerhalb der inneren Öffnung des Lageraußenrings 8 angeordnet ist. Bei der axialen Bewegung des Lageraußenrings 8 relativ zum Lagerkäfig 22 federn die zweiten Federn 23 in Richtung nach radial innen gerichtet ein, bis sie außerhalb des Kontaktbereichs mit der Innenumfangsfläche 13 des Lageraußenrings 8 gelangen. Eine solche Konfiguration ist dann in Fig. 5 der Zeichnung gezeigt.

Wie es ohne weiteres ersichtlich ist, federn die zweiten Federn 23 radial nach au-βen gerichtet aus, wenn sie nicht mehr an der Innenumfangsfläche 13 des Lageraußenrings 8 anliegen. Durch den feststehenden Bund 19, der an der Stirnfläche 10 des Lageraußenrings 8 zur Anlage gebracht werden kann, wenn der Lagerau-βenring 8 eine axiale Bewegung relativ zum Lagerkäfig 22 ausführt und in ähnlicher Weise die Stirnfläche 14 mit den zweiten Federn 23 in Anlage gebracht werden kann, erfährt der Lageraußenring 8 eine Lagesicherung relativ zum Lagerkäfig 22. Fig. 5 der Zeichnung zeigt darüber hinaus wieder eine aufgrund der Anordnung einer weiteren Nocke 3 an der Nockenwelle 1 vervollständigte Welle, bei der es sich auch um eine, eine andere Funktion ausübende gebaute Welle handeln kann, die im Bereich des Lageraußenrings 8 von einem Lagerdeckel 15 festgelegt ist.

Fig. 6 der Zeichnung nun zeigt eine perspektivische Ausschnittsdarstellung des Lagerkäfigs 22. Dieser weist wiederum Ausnehmungen 9 zur Aufnahme der in Fig. 4 und 5 der Zeichnung dargestellten Wälzkörper 6 auf. Zudem zeigt Fig. 6 noch nähere Einzelheiten der in Umfangsrichtung des Lagerkäfigs 22 angeordneten zweiten Federn 23.

Wie es ohne weiteres ersichtlich ist, stehen diese aus der die Ausnehmungen 9 aufweisenden Ebene des Lagerkäfigs 22 hervor und sind damit einstückig ausgebildet und können in Ausnehmungen 24 einfedern, wenn der Lageraußenring 8 mit seiner Innenumfangsfläche 13 an den zweiten Federn 23 anliegt. Der zweite Lagerkäfig 22 besitzt wieder einen feststehenden Bund 19, der sich aus der Ebene der Ausnehmungen 9 heraus erstreckt und als Umlaufbund ausgebildet ist und als Anlagefläche für die Stirnfläche 10 des Lageraußenrings 8 dient.

Fig. 7A zeigt nun einen Ausschnitt des Lagerkäfigs 22 mit Ausnehmungen 9 und unterschiedlichen Ausführungsformen zweiter Federn 23. Die in der oberen Hälfte der Fig. 7A dargestellte zweite Feder 23A entspricht den in Fig. 6 dargestellten zweiten Federn 23, die in Umfangsrichtung des Lagerkäfigs 22 im Bereich des Bunds 25 angeordnet sind.

Die in Fig. 7A in der unteren Zeichnungshälfte dargestellte zweite Feder 23B ist um einen Winkel α aus der Umfangsrichtung des Lagerkäfigs 22 geneigt angeordnet und zwar im vorliegenden Fall in einem Winkel von etwa 45 Grad.

Kommt nun der Lageraußenring 8 bei seiner Bewegung über den an der Wälzkörperlaufbahn 5 angeordneten Lagerkäfig 22 mit der zweiten Feder 23B in Kontakt, so liegt der erste Kontaktpunkt zwischen der Stirnfläche 10 des Lageraußenrings 8 und der zweiten Feder 23B an der Stirnkante 26, die in Fig. 7B dargestellt ist. Aufgrund der Anordnung der zweiten Feder 23B im Winkel α zur Umfangsrichtung des Bunds 25 beziehungsweise des Lagerkäfigs 22 führt diese Schrägstellung der zweiten Feder 23B dazu, dass die zweiten Federn 23B selbsttätig in Richtung nach innen gerichtet in komplementär angeordnete Ausnehmungen 24 des Bunds 25 einfedern und bei der axialen Bewegung des Lageraußenrings 8 relativ zum Lagerkäfig 22 nicht flächig an der Stirnfläche 10 zur Anlage kommen. Dies erleichtert die Montage des Lageraußenrings 8 am Lagerkäfig 22.

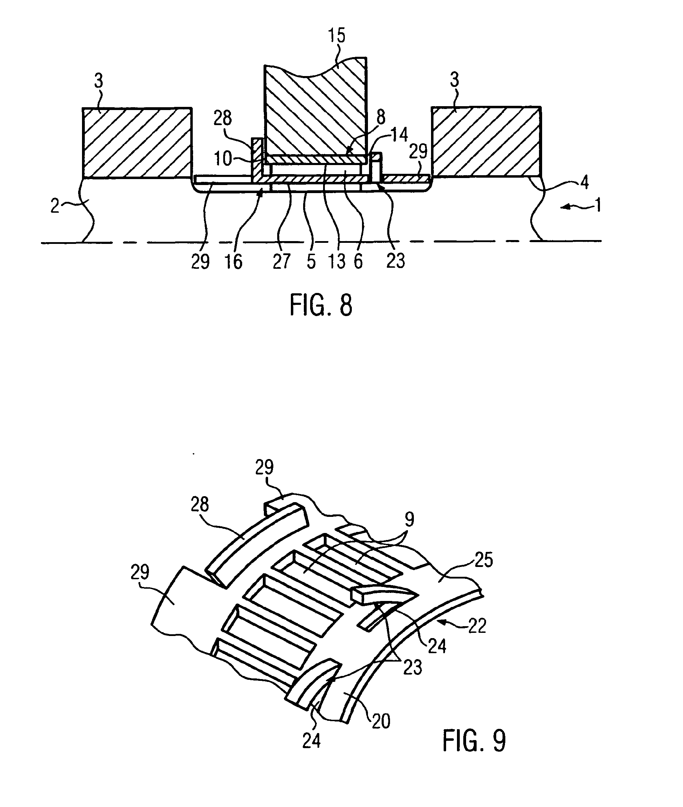

Fig. 8 der Zeichnung zeigt eine Darstellung ähnlich Fig. 2 und Fig. 5. Eine gebaute Welle 1 in der Form einer Nockenwelle - es kann sich auch um eine andere, Funktionsbauteile aufweisende Welle, beispielsweise eine Verstellwelle für einen variablen Ventiltrieb oder eine andere gebaute Welle handeln, wird von einem Lagerdeckel 15 und einer nicht näher dargestellten Lagerstuhlunterseite gehalten, wobei der Lagerdeckel 15 wieder einen Lageraußenring 8 übergreift. Über ein feststehendes Bundsegment 28 und zweite Federn 23 an einem Lagerkäfig 27 wird der Lageraußenring 8 unverlierbar relativ zum Lagerkäfig 27 gehalten.

Der Lagerkäfig 27 ist näher anhand eines in Fig. 9 dargestellten perspektivischen Ausschnitts ersichtlich. Wie es ohne weiteres ersichtlich ist, weist auch der Lagerkäfig 27 Ausnehmungen 9 zur Aufnahme nicht näher dargestellter Wälzkörper 6 auf. Auch sind, ähnlich wie bei der Ausführungsform in Fig. 6, am Bund 25 einstückig ausgebildete zweite Federn 23 vorgesehen, die in Ausnehmungen 24 einfedern können. Der in Fig. 9 dargestellte Lagerkäfig 27 unterscheidet sich aber von dem in Fig. 6 dargestellten Lagerkäfig 22 dadurch, dass statt eines umlaufenden feststehenden Bunds 19 am Lagerkäfig 27 Bundsegmente 28 vorgesehen sind. Diese Bundsegmente 28 erfüllen die gleiche Funktion wie der umlaufende feststehende Bund 19 der Ausführungsform des Lagerkäfigs nach Fig. 6.

Wie es ohne weiteres anhand von Fig. 9 ersichtlich ist, weist der Lagerkäfig 27 in Axiallängsrichtung des Lagerkäfigs 27 verlaufende Borde 29 auf, die an beiden Stirnseiten des Lagerkäfigs 27 vorgesehen sein können, wie dies die Konfiguration gemäß Fig. 8 der Zeichnung zeigt. Diese feststehenden Borde 29 dienen als Abstandshalter und Mittel zur axialen Lagefixierung des Lagerkäfigs 27 relativ zu den an der Welle 1 angeordneten Funktionsbauteilen in der Form beispielsweise der in Fig. 8 dargestellten Nocken 3. Über diese feststehenden Borde 29 weist nun der Lagerkäfig 27 eine Lagesicherung relativ zur Welle 1 auf und der Lageraußenring 8 besitzt eine Lagesicherung relativ zum Lagerkäfig 27 über die Bundsegmente 28 beziehungsweise die zweiten Federn 23, bei denen es sich auch um zweite Federn 23B handeln kann, die in einem Winkel zur Umfangsrichtung des Bordes 25 beziehungsweise des Lagerkäfigs 27 verlaufen können.

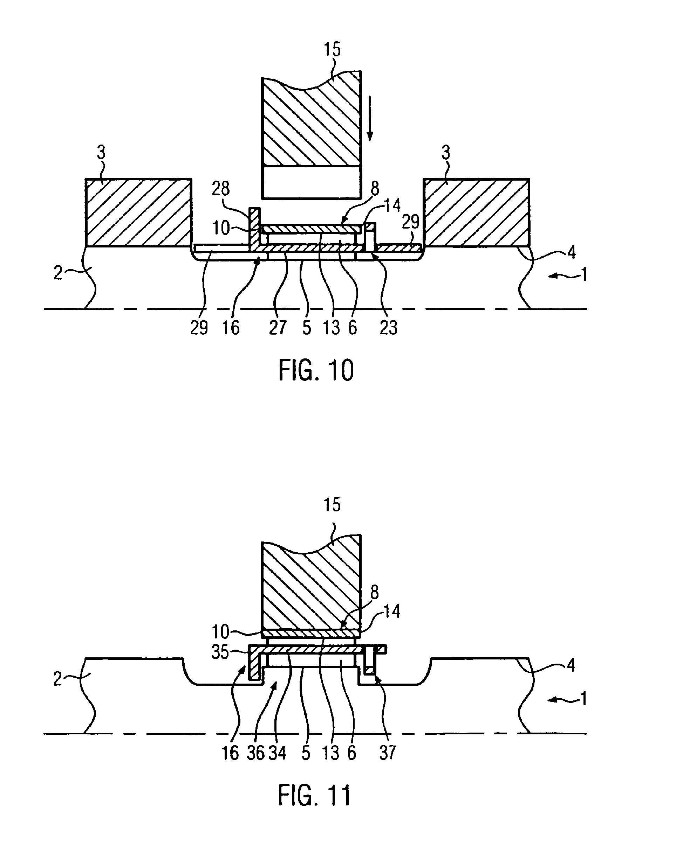

Fig. 10 der Zeichnung nun zeigt einen Montageschritt zur Lagefixierung der fertigen gebauten Welle 1, wie sie in Fig. 8 der Zeichnung dargestellt ist Eine mittels dem erfindungsgemäßen Verfahren vollständig vormontierte Welle 1 wird beispielsweise im Zylinderkopf einer Brennkraftmaschine als Nockenwelle 1 angeordnet und zwar so, dass die Lageraußenringe 8 der mehreren an der Nockenwelle 1 angebrachten Wälzlager 16 in Lagerstuhlunterteile eingesetzt werden. Dann können auch Lagerdeckel 15 auf die Lageraußenringe 8 aufgesetzt werden und beispielsweise mittels Schraubverbindungen mit den Lagerstuhlunterteilen lösbar verbunden werden. Auf diese Weise wird eine vollständig vormontierte Welle 1 mit relativ zur Welle 1 lagegesicherten Lagerkäfigen 27 und relativ zu diesen gesicherten Lageraußenringen 8 am Einsatzort, also beispielsweise einem Zylinderkopf einer Brennkraftmaschine festgelegt.

Fig. 11 der Zeichnung nun zeigt eine Ausführungsform eines Lagerkäfigs 34, der nicht Teil eines erfindungsgemäßen Wälzlagers ist. Der Lagerkäfig 34 besitzt in Richtung nach radial innen gerichtet an einem stirnseitigen Endbereich Federn 35.

Die Welle 1 weist einen Wellenabsatz 36 auf, an dem Wälzkörper 6 in der Form von beispielsweise Nadeln abrollen können, die in nicht näher dargestellten Ausnehmungen des Lagerkäfigs 34 geführt werden. Darüber hinaus besitzt der Lagerkäfig 34 auch am anderen stirnseitigen Endbereich Federn 37, die an dem, den Federn 35 gegenüberliegenden Endbereich des Lagerkäfigs 34 vorgesehen sind und sich in Richtung nach radial innen gerichtet erstrecken. Wird nun der Lagerkäfig 34 auf die Welle 1 aufgeschoben, während er beispielsweise den dargestellten Wellenabsatz 2 oder 4 mit einem Durchmesser passiert, der größer ist als der

Durchmesser des Wellenabsatzes 36, so kommen die Federn 35 oder 37 mit dem in Montagerichtung vorderen Ende des Wellenabsatzes 36 in Kontakt und federn in Richtung nach radial außen gerichteten weg. Sobald die Federn das in Montagerichtung hintere Ende des Wellenabsatzes 36 passiert haben, federn sie in Richtung nach radial innen gerichtet aus, so dass der Lagerkäfig 34 über die Federn 35 und die Federn 37 axial lagegesichert ist. Anstelle der Federn 35 kann am Lagerkäfig auch ein nach radial innen gerichteter Umlaufbund vorgesehen sein, der bei der Montage des Lagerkäfigs am Wellenabsatz zur Anlage kommt und über einen Wellenabsatz 2 oder 4 aufgrund einer vorgesehenen Durchmesserdifferenz zwischen Außendurchmesser des Wellenabsatzes und Innendurchmesser des Umlaufbundes montierbar ist, so dass der Lagerkäfig mittels Umlaufbund und Federn an der Welle festlegbar ist.

Über einen in Figur 11 am Lagerkäfig 34 nicht näher dargestellten Bund und sich ähnlich zu den vorstehend beschriebenen Ausführungsformen in Richtung nach radial außen gerichtet im ausgefederten Zustand erstreckende Federn oder entsprechende Federn an beiden axialen Endbereichen des Lagerkäfigs 34 erfährt der Lageraußenring 8 eine Lagesicherung relativ zum Lagerkäfig 34. Fig. 11 zeigt nun auch noch einen Lagerdeckel 15, der den Lageraußenring 8 außen umgibt. Durch die in Figur 11 dargestellte Ausführungsform erfährt nun der Lagerkäfig 34 eine Lagesicherung relativ zur Welle 1 und auch der Lageraußenring 8 erfährt eine Lagesicherung relativ zum Lagerkäfig 34.

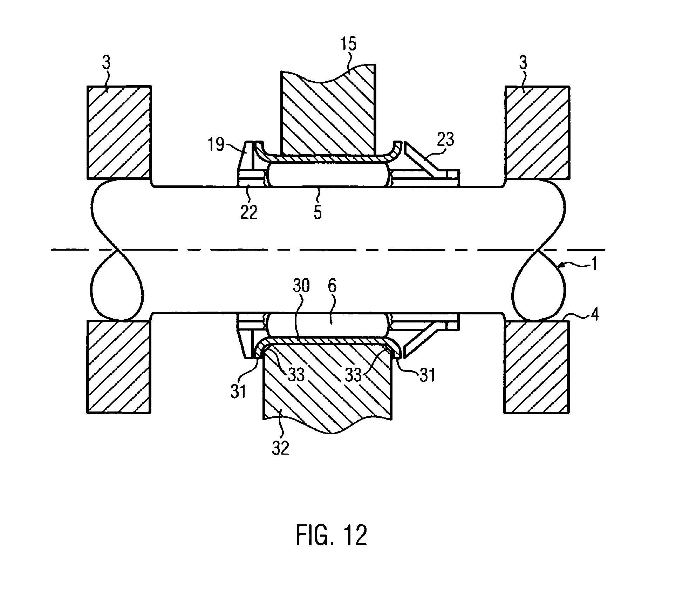

Fig. 12 der Zeichnung nun zeigt noch in einer schematischen Darstellung eine Nockenwelle 1 mit einem daran angeordneten Wälzlager 16. Auch hier wird ein Lagerkäfig 7 wieder über einen Wellenabsatz 4 in den Bereich einer Wälzlagerlaufbahn 5 gebracht, indem die Wälzkörper 6 während der Bewegung des Lagerkäfigs 22 über den Wellenabsatz 4 hinweg eine radial nach außen gerichtete Bewegung relativ zum Lagerkäfig 22 ausführen. Dann wird ein Lageraußenring 30, der an beiden Stirnflächen radial nach außen gerichtete Umlaufbunde 31 besitzt, in Richtung des Lagerkäfigs 22 bewegt und dabei federn am Lagerkäfig 22 vorgesehene zweite Federn 23 in Richtung nach radial innen gerichtet ein. Der Lagerkäfig 22 besitzt wieder einen feststehenden Bund 19, an dem der Umlaufbund 31 des Lageraußenrings zur Anlage gebracht werden kann. Sobald der Lageraußenring 30 relativ zum Lagerkäfig 22 seine bestimmungsgemäße Position eingenommen hat, federn die zweiten Federn 23 wieder radial nach außen gerichtet aus und können bei einer Relativverlagerung des Lagerkäfigs 22 und des Lageraußenrings 30 mit dem in der Zeichnungsebene im rechten Endbereich des Lageraußenrings 30 angeordneten Umlaufbund 31 in Anlage kommen und führen so eine Lagesicherung des Lageraußenrings 30 und des Lagerkäfigs 22 herbei.

Die so vormontierte Welle kann nun wieder an den bestimmungsgemäßen Einsatzort gebracht werden, beispielsweise den bereits erwähnten Zylinderkopf einer Brennkraftmaschine, so dass der Lageraußenring 31 am Lagerstuhlunterteil 32 zur Anlage kommt. Die an beiden Endflächen des Lageraußenrings 30 vorgesehenen Umlaufbunde 31 kommen dann mit den beiden axialen Endflächen des Lagerstuhlunterteils 32 in Kontakt. Dieses besitzt Fasen 33 im Bereich eines Übergangsradius zwischen dem radial nach außen gerichteten Umlaufbund 31 und dem rohrstückförmig ausgebildeten Hauptkörper des Lageraußenrings 30, die als Freistellung für diesen Übergangsradius dienen. Diese Konfiguration besitzt den Vorteil, dass zur Aufnahme des an der Welle 1 angeordneten Wälzlagers in den aus Lagerstuhlunterteil 32 und Lagerdeckel 15 gebildeten Lagerstuhl nur die Aufnahmebohrung des Lagerstuhls bearbeitet werden muss und die Fase 33 mittels eines Gießvorgangs fertig gestellt werden kann. Der Lagerdeckel 15 ist schmäler ausgebildet als das Lagerdeckelunterteil 32, so dass die dargestellten Fasen 33 im Grundkörperbereich des Lagerstuhls in Entformungsrichtung während des Gießvorgangs hergestellt werden können und nicht spanend bearbeitet werden müssen, wodurch eine kostengünstige Fertigung ermöglicht ist. Der so gebildete Lagerstuhl kann dann durch eine Bruchtrennoperation getrennt werden und ist nur im Bereich der Öffnung zur Aufnahme des Wälzlagers spanend zu bearbeiten. Entsprechende Fasen können bei einem separat hergestellten Lagerdeckel 15 ebenfalls vorgesehen sein.

Mit dem erfindungsgemäßen Verfahren ist es nun möglich, ein Wälzlager mit einem ungeteilten Lageraußenring und einem ungeteilten Lagerkäfig an einer Wälzkörperlaufbahn anzubringen, die zwischen zwei Wellenabsätzen liegt, die einen größeren Durchmesser besitzen, als die Wälzkörperlaufbahn selbst. Das hierzu geschaffene Wälzlager besitzt einen Lageraußenring mit einer ungeteilten Laufbahn und einen Lagerkäfig, der weder geschlitzt noch geteilt ist. Damit zeichnet sich das erfindungsgemäße Wälzlager mit hoher dynamischer und statischer Steifigkeit aus und besitzt keine Stoßstelle im Bereich der Wälzkörperlaufbahn des Lageraußenrings.

Hinsichtlich vorstehend im Einzelnen nicht näher erläuterter Merkmale wird im Übrigen ausdrücklich auf die Ansprüche und die Zeichnung verwiesen.

### Bezugszeichenliste

- 1: Nockenwelle
- 2: Wellenabsatz
- 3: Nocke
- 4: Wellenabsatz
- 5: Wälzkörperlaufbahn
- 6: Wälzkörper
- 7: Lagerkäfig
- 8: Lageraußenring
- 9: Ausnehmung
- 10: Stirnfläche
- 11: Sicherungsmittel
- 12: Erste Federn
- 13: Innenumfangsfläche
- 14: Stirnfläche
- 15: Lagerdeckel
- 16: Wälzlager
- 17: Ausnehmung
- 18: Hakenförmiger Endbereich
- 19: Feststehender Bund
- 20: Bord
- 21: Steg
- 22: Lagerkäfig
- 23: Zweite Federn
- 23A: Zweite Federn
- 23B: Zweite Federn
- 24: Ausnehmung
- 25: Bord
- 26: Stirnkante
- 27: Lagerkäfig
- 28: Bundsegment
- 29: Borde
- 30: Lageraußenring
- 31: Umlaufbund
- 32: Lagerstuhlunterteil
- 33: Fase
- 34: Lagerkäfig
- 35: Federn
- 36: Wellenabsatz
- 37: Federn
- α: Winkel

## Patentansprüche

1. Verfahren der Anordnung eines einen ungeteilten Lageraußenring (8, 30) und einen ungeteilten Lagerkäfig (7, 22, 27, 34) aufweisenden Wälzlagers (16) an einer Welle (1), die mindestens einen Wellenabsatz (2, 4) mit einem Durchmesser aufweist, der größer ist als der Durchmesser der Wälzkörperlaufbahn (5), **gekennzeichnet durch** folgende Schritte:
- Bewegen des vom Lageraußenring (8, 30) getrennten Lagerkäfigs (7, 22, 27, 34) über den Wellenabsatz (2, 4) hinweg zur Wälzkörperlaufbahn (5) mit einer radial nach außen gerichteten Bewegung der Wälzkörper (6) innerhalb des Lagerkäfigs (7, 22, 27, 34) im Bereich des Wellenabsatzes (2, 4)
- Bewegen des Lageraußenrings (8, 30) in Achsrichtung der Welle (1) über den Lagerkäfig (7, 22, 27, 34) zur Aufnahme des Lagerkäfigs (7, 22, 27, 34) in einer Öffnung des Lageraußenrings (8, 30)
- Herstellen einer axialen Lagesicherung zwischen Lageraußenring (8, 30) und Lagerkäfig (7, 22, 27, 34) mittels am Lagerkäfig (7, 22, 27, 34) vorgesehener selbsttätig wirkender Sicherungsmittel (12, 23, 23A, 23B).

2. Verfahren der Anordnung eines einen ungeteilten Lageraußenring (8, 30) und einen ungeteilten Lagerkäfig (7, 22, 27, 34) aufweisenden Wälzlagers (16) an einer Welle (1), die mindestens einen Wellenabsatz (2, 4) mit einem Durchmesser aufweist, der größer ist als der Durchmesser der Wälzkörperlaufbahn (5), **gekennzeichnet durch** folgende Schritte:
- Bewegen des vom Lageraußenring (8, 30) getrennten Lagerkäfigs (7, 22, 27, 34) über den Wellenabsatz (2, 4) hinweg zur Wälzkörperlaufbahn (5) mit einer radial nach außen gerichteten Bewegung der Wälzkörper (6) innerhalb des Lagerkäfigs (7, 22, 27, 34) im Bereich des Wellenabsatzes (2, 4)
- Bewegen der Welle (1) zusammen mit dem Lagerkäfig (7, 22, 27, 34) **durch** eine Öffnung des Lageraußenrings (8, 30) hindurch derart, dass der Lagerkäfig (7, 22, 27, 34) in der Öffnung aufgenommen ist
- Herstellen einer axialen Lagesicherung zwischen Lageraußenring (8, 30) und Lagerkäfig (7, 22, 27, 34) mittels am Lagerkäfig (7, 22, 27, 34) vorgesehener selbsttätig wirkender Sicherungsmittel (12, 23, 23A, 23B).

3. Verfahren nach Anspruch 1 oder 2, **dadurch gekennzeichnet, dass** zur Lagesicherung am Lagerkäfig (7, 22, 27, 34) einstückig vorgesehene Federn (12, 23) mit mindestens einer Stirnseite des Lageraußenrings (8, 30) in Anlage gebracht werden.

4. Verfahren nach einem der vorstehenden Ansprüche, **dadurch gekennzeichnet, dass** zur Lagesicherung am Lagerkäfig (34) vorgesehene Federn (37) mit an der Welle (1) vorgesehenen Vertiefungen oder Absätzen (36) in Eingriff gebracht werden.

5. Verfahren nach einem der vorstehenden Ansprüche, **dadurch gekennzeichnet, dass** zur Lagesicherung an beiden Stirnseiten des Lagerkäfigs (27) einstückig vorgesehene und sich weitgehend in Achsrichtung des Lagerkäfigs (27) erstreckende Borde (29) an an der Welle (1) vorgesehenen Absätzen in Anlage gebracht werden derart, dass der Lageraußenring (8) mittels der Sicherungsmittel, insbesondere der Federn (23), relativ zum Lagerkäfig (27) und zur Welle (1) festgelegt wird.

6. Verwendung des Verfahrens nach einem der vorstehenden Ansprüche zur Herstellung einer gebauten Welle (1), **dadurch gekennzeichnet, dass** mindestens ein Wälzlager (16) mit ungeteiltem Lagerkäfig (7, 22, 27, 34) und ungeteiltem Lageraußenring (8, 30) zwischen beabstandet angeordneten Absätzen zur Aufnahme von Nocken (3) angeordnet wird.

7. Wälzlager (16) insbesondere zur Durchführung des Verfahrens nach einem der vorstehenden Ansprüche mit einem ungeteilten Lageraußenring (8, 30) und einem davon trennbaren, Wälzkörper (6) führenden ungeteilten Lagerkäfig (7, 22, 27, 34), und mit Sicherungsmitteln (12, 23), die bei der Montage des Lageraußenrings (8, 30) und des Lagerkäfigs (7, 22, 27, 34) eine Lagesicherung des Lageraußenrings (8, 30) und Lagerkäfigs (7, 22, 27, 34) relativ zueinander selbsttätig herbeiführen, **dadurch gekennzeichnet, dass** die Sicherungsmittel am Lagerkäfig (7, 22, 27, 34) angeordnete Federn (12, 23, 23A, 23B) sind, die bei der Anordnung des Lageraußenrings (8, 30) am Lagerkäfig (7, 22, 27, 34) in Richtung radial nach innen gerichtet ausweichen und nach der Anordnung des Lagerkäfigs (7, 22, 27, 34) in einer Öffnung des Lageraußenrings (8, 30) mit einer Stirnfläche (10, 14) des Lageraußenrings (8, 30) in Kontakt bringbar sind.

8. Wälzlager (16) nach Anspruch 7, **dadurch gekennzeichnet, dass** am Lagerkäfig (7, 22, 27, 34) mindestens ein sich radial nach außen gerichtet erstreckender Bund (19, 28) vorgesehen ist, an dem der Lageraußenring (8, 30) in Anlage bringbar ist.

9. Wälzlager (16) nach Anspruch 7 oder 8, **dadurch gekennzeichnet, dass** die Sicherungsmittel sich in Längsrichtung des Lagerkäfigs (7, 22, 27, 34) erstreckende erste Federn (12) sind, die im Raum zwischen Wälzkörper (6) aufnehmenden Ausnehmungen (9) des Lagerkäfigs (7, 22, 27, 34) angeordnet sind und am freien Endbereich sich aus der Ebene der Ausnehmungen (9) heraus erstreckende Federlaschen besitzen, die mit der Stirnfläche (10, 14) des Lageraußenrings (8, 30) in Kontakt bringbar sind.

10. Wälzlager (16) nach einem der Ansprüche 7 bis 9, **dadurch gekennzeichnet, dass** die Sicherungsmittel sich in Umfangsrichtung des Lagerkäfigs (7, 22, 27, 34) erstreckende zweite Federn (23, 23A, 23B) sind, die sich am freien Endbereich aus der Ebene der Ausnehmungen (24) heraus erstreckende Federlaschen besitzen, die mit der Stirnfläche (10, 14) des Lageraußenrings (8, 30) in Kontakt bringbar sind.

11. Wälzlager (16) nach Anspruch 10, **dadurch gekennzeichnet, dass** die zweiten Federn (23, 23A, 23B) in einem Winkel (α) zur Umfangsrichtung von 0 Grad bis 90 Grad, insbesondere in einem Winkel (α) von 20 Grad bis 45 Grad angeordnet sind.

12. Wälzlager (16) nach einem der Ansprüche 7 bis 11, **dadurch gekennzeichnet, dass** der Lageraußenring (8, 30) im Bereich beider Stirnflächen einen sich in Richtung nach radial außen gerichtet erstreckenden Umlaufbund (31) besitzt, der mit Stirnflächen eines Lagersitzes in Anlage bringbar ist und am Lagerkäfig (7, 22, 27, 34) vorgesehene Sicherungsmittel in der Form von Federn und/oder einem Bund oder Bundsegmenten (28) mit dem Umlaufbund (31) zur Lagesicherung des Lagerkäfigs (7, 22, 27, 34) relativ zum Lageraußenring (8, 30) in Anlage bringbar ist.

13. Welle (1) mit einem rohrstückförmigen Grundkörper und mindestens einem Wälzlager (16) nach einem der Ansprüche 7 bis 12.

14. Welle (1) nach Anspruch 13, **dadurch gekennzeichnet, dass** die Welle (1) eine Verstellwelle eines hubvariablen Ventiltriebs oder eine Nockenwelle (1) einer Brennkraftmaschine ist.

## Claims

1. A method for arranging a rolling bearing (16) with an undivided outer bearing ring (8, 30) and an undivided bearing cage (7, 22, 27, 34) on a shaft (1) that features at least one shoulder (2, 4) with a diameter that is larger than the diameter of the rolling body raceway (5), **characterized by** the following steps:
- moving the bearing cage (7, 22, 27, 34) that is separated from the outer bearing ring (8, 30) over the shoulder (2, 4) to the rolling body raceway (5) with a radially outwards directed motion of the rolling bodies (6) within the bearing cage (7, 22, 27, 34) in the region of the shoulder (2, 4)
- moving the outer bearing ring (8, 30) over the bearing cage (7, 22, 27, 34) in the axial direction of the shaft (1) in order to accommodate the bearing cage (7, 22, 27, 34) in an opening of the outer bearing ring (8, 30)
- securing the axial position between the outer bearing ring (8, 30) and the bearing cage (7, 22, 27, 34) by means of self-acting securing means (12, 23, 23A, 23B) provided on the bearing cage (7, 22, 27, 34).

2. A method for arranging a rolling bearing (16) with an undivided outer bearing ring (8, 30) and an undivided bearing cage (7, 22, 27, 34) on a shaft (1) that features at least one shoulder (2, 4) with a diameter that is larger than the diameter of the rolling body raceway (5), **characterized by** the following steps:
- moving the bearing cage (7, 22, 27, 34) that is separated from the outer bearing ring (8, 30) over the shoulder (2, 4) to the rolling body raceway (5) with a radially outwards directed motion of the rolling bodies (6) within the bearing cage (7, 22, 27, 34) in the region of the shoulder (2, 4)
- moving the shaft (1) along with the bearing cage (7, 22, 27, 34) through an opening of the outer bearing ring (8, 30) in such a way that the bearing cage (7, 22, 27, 34) is accommodated in the opening
- securing the axial position between the outer bearing ring (8, 30) and the bearing cage (7, 22, 27, 34) by means of self-acting securing means (12, 23, 23A, 23B) provided on the bearing cage (7, 22, 27, 34).

3. The method according to Claim 1 or 2, **characterized in that** the position is secured by bringing integral springs (12, 23) provided on the bearing cage (7, 22, 27, 34) in contact with at least one face of the outer bearing ring (8, 30).

4. The method according to one of the preceding claims, **characterized in that** the position is secured by engaging springs (37) provided on the bearing cage (34) with recesses or shoulders (36) provided on the shaft (1).

5. The method according to one of the preceding claims, **characterized in that** the position is secured by bringing integral flanges (29) that are provided on both faces of the bearing cage (27) and largely extend in the axial direction of the bearing cage (27) in contact with shoulders provided on the shaft (1) in such a way that the outer bearing ring (8) is fixed relative to the bearing cage (27) and to the shaft (1) with the aid of the securing means, particularly the springs (23).

6. A utilization of the method according to one of the preceding claims for the production of an assembled shaft (1), **characterized in that** at least one rolling bearing (16) with an undivided bearing cage (7, 22, 27, 34) and an undivided outer bearing ring (8, 30) is arranged between shoulders that are spaced apart from one another in order to accommodate cams (3).

7. A rolling bearing (16), particularly for carrying out the method according to one of the preceding claims, with an undivided outer bearing ring (8, 30) and an undivided bearing cage (7, 22, 27, 34) that can be separated from the outer bearing ring and guides rolling bodies (6), and with securing means (12, 23) that secure the position of the outer bearing ring (8, 30) and the bearing cage (7, 22, 27, 34) relative to one another in a self-acting fashion during the assembly of the outer bearing ring (8, 30) and the bearing cage (7, 22, 27, 34), **characterized in that** the securing means consist of springs (12, 23, 23A, 23B) arranged on the bearing cage (7, 22, 27, 34) that yield radially inwards during the arrangement of the outer bearing ring (8, 30) on the bearing cage (7, 22, 27, 34) and can be brought in contact with a face (10, 14) of the outer bearing ring (8, 30) after the arrangement of the bearing cage (7, 22, 27, 34) in an opening of the outer bearing ring (8, 30).

8. The rolling bearing (16) according to Claim 7, **characterized in that** at least one radially outwards extending collar (19, 28), with which the outer bearing ring (8, 30) can be brought in contact, is provided on the bearing cage (7, 22, 27, 34).

9. The rolling bearing (16) according to Claim 7 or 8, **characterized in that** the securing means consist of first springs (12) that extend in the longitudinal direction of the bearing cage (7, 22, 27, 34) and are arranged in the space between recesses (9) of the bearing cage (7, 22, 27, 34) that accommodate rolling bodies (6), wherein said first springs feature on their free end region spring shackles that extend out of the plane of the recesses (9) and can be brought in contact with the face (10, 14) of the outer bearing ring (8, 30).

10. The rolling bearing (16) according to one of Claims 7 to 9, **characterized in that** the securing means consist of second springs (23, 23A, 23B) that extend in the circumferential direction of the bearing cage (7, 22, 27, 34) and feature on their free end region spring shackles that extend out of the plane of the recesses (24) and can be brought in contact with the face (10, 14) of the outer bearing ring (8, 30).

11. The rolling bearing (16) according to Claim 10, **characterized in that** the second springs (23, 23A, 23B) are arranged at an angle (α) between 0 degrees and 90 degrees, particularly at an angle (α) between 20 degrees and 45 degrees, relative to the circumferential direction.

12. The rolling bearing (16) according to one of Claims 7 to 11, **characterized in that** the outer bearing ring (8, 30) features in the region of both faces a radially outwards extending circumferential collar (31) that can be brought in contact with faces of a bearing seat and securing means that are provided on the bearing cage (7, 22, 27, 34) and realized in the form of springs and/or a collar or collar segments (28) can be brought in contact with the circumferential collar (31) in order to secure the position of the bearing cage (7, 22, 27, 34) relative to the outer bearing ring (8, 30).

13. A shaft (1) with a tubular base body and at least one rolling bearing (16) according to one of Claims 7 to 12.

14. The shaft (1) according to Claim 13, **characterized in that** the shaft (1) is an adjusting shaft of a valve drive with variable lift or a camshaft (1) of an internal combustion engine.

## Revendications

1. Procédé de disposition d'une bague extérieure de palier non divisée (8, 30) et d'un palier à roulements (16) présentant une cage de palier non divisée (7, 22, 27, 34) sur un arbre (1) qui présente au moins un talon d'arbre (2, 4) ayant un diamètre qui est supérieur au diamètre de la bande de roulement du corps de roulement (5), **caractérisé par** les étapes suivantes :
- Déplacement de la cage de palier (7, 22, 27, 34) séparée de la bague extérieure de palier (8, 30) au-delà du talon d'arbre (2, 4) en direction de la bande de roulement du corps de roulement (5) par un mouvement dirigé radialement vers l'extérieur des corps de roulement (6) dans la cage de palier (7, 22, 27, 34) au niveau du talon d'arbre (2, 4).
- Déplacement de la bague extérieure de palier (8, 30) en direction de l'axe de l'arbre (1) au-dessus de la cage de palier (7, 22, 27, 34) pour recevoir la cage de palier (7, 22, 27, 34) dans un orifice de la bague extérieure de palier (8, 30).
- Etablissement d'un blocage de position axial entre la bague extérieure de palier (8, 30) et la cage de palier (7, 22, 27, 34) au moyen de moyens de blocage (12, 23, 23A, 23B) agissant automatiquement prévus au niveau de la cage de palier (7, 22, 27, 34).

2. Procédé de disposition d'une bague extérieure de palier non divisée (8, 30) et d'un palier à roulements (16) présentant une cage de palier non divisée (7, 22, 27, 34) sur un arbre (1) qui présente au moins un talon d'arbre (2, 4) ayant un diamètre qui est supérieur au diamètre de la bande de roulement du corps de roulement (5), **caractérisé par** les étapes suivantes :
- Déplacement de la cage de palier (7, 22, 27, 34) séparée de la bague extérieure de palier (8, 30) au-delà du talon d'arbre (2, 4) en direction de la bande de roulement du corps de roulement (5) par un mouvement dirigé radialement vers l'extérieur des corps de roulement (6) dans la cage de palier (7, 22, 27, 34) au niveau du talon d'arbre (2, 4).
- Déplacement de l'arbre (1) avec la cage de palier (7, 22, 27, 34) à travers un orifice de la bague extérieure de palier (8, 30) de manière à ce que la cage de palier (7, 22, 27, 34) soit reçue dans l'orifice.
- Etablissement d'un blocage de position axial entre la bague extérieure de palier (8, 30) et la cage de palier (7, 22, 27, 34) au moyen de moyens de blocage (12, 23, 23A, 23B) agissant automatiquement prévus au niveau de la cage de palier (7, 22, 27, 34).

3. Procédé selon la revendication 1 ou 2, **caractérisé en ce que**, pour bloquer la position, des ressorts en une pièce (12, 23) prévus au niveau de la cage de palier (7, 22, 27, 34) sont mis en contact avec au moins une face frontale de la bague extérieure de palier (8, 30).

4. Procédé selon une des revendications précédentes, **caractérisé en ce que**, pour bloquer la position, des ressorts (37) prévus au niveau de la cage de palier (34) sont mis en prise avec des creux ou talons (36) prévus au niveau de l'arbre (1).

5. Procédé selon une des revendications précédentes, **caractérisé en ce que**, pour bloquer la position, des bordures en une pièce (29) prévues sur les deux faces frontales de la cage de palier (27) et s'étendant largement dans le sens de l'axe de la cage de palier (27) sont mis en contact avec des talons prévus au niveau de l'arbre (1) de manière à ce que la bague extérieure de palier (8) soit fixée au moyen des moyens de blocage, en particulier des ressorts (23), par rapport à la cage de palier (27) et à l'arbre (1).

6. Utilisation du procédé selon une des revendications précédentes pour la fabrication d'un arbre structuré (1), **caractérisé en ce qu'**au moins un palier à roulements (16) comportant une cage de palier non divisée (7, 22, 27, 34) et une bague extérieure de palier non divisée (8, 30) est disposée entre des talons d espacés pour recevoir des cames (3).

7. Palier à roulements (16), en particulier pour la réalisation du procédé selon une des revendications précédentes, comportant une bague extérieure de palier non divisée (8, 30) et une cage de palier (7, 22, 27, 34) non divisée guidant des corps de roulement (6) et pouvant en être séparée et des moyens de blocage (12, 23) qui, lors du montage de la bague extérieure de palier (8, 30) et de la cage de palier (7, 22, 27, 34), entraînent automatiquement un blocage de la position mutuelle de la bague extérieure de palier (8, 30) et de la cage de palier (7, 22, 27, 34) lors du montage de la bague extérieure de palier (8, 30) et de la cage de palier (7, 22, 27, 34), **caractérisé en ce que** les moyens de blocage sont des ressorts (12, 23, 23A, 23B) disposés au niveau de la cage de palier (7, 22, 27, 34) et qui, lors de la disposition de la bague extérieure de palier (8, 30) au niveau de la cage de palier (7, 22, 27, 34) dévient radialement vers l'intérieur et, après la disposition de la cage de palier (7, 22, 27, 34) dans un orifice de la bague extérieure de palier (8, 30) peuvent être mis en contact avec une surface frontale (10, 14) de la bague extérieure de palier (8, 30).

8. Palier à roulements (16) selon la revendication 7, **caractérisé en ce qu'**il est prévu, au niveau de la cage de palier (7, 22, 27, 34), au moins une collerette (19, 28) s'étendant radialement vers l'extérieur et avec laquelle la bague extérieure de palier (8, 30) peut être mise en contact.

9. Palier à roulements (16) selon la revendication 7 ou 8, **caractérisé en ce que** les moyens de blocage sont de premiers ressorts (12) s'étendant dans le sens longitudinal de la cage de palier (7, 22, 27, 34) et qui sont disposés dans l'espace entre les évidements (9) recevant les corps de roulement (6) de la cage de palier (7, 22, 27, 34) et possèdent à leur extrémité libre des brides élastiques s'étendant depuis le plan des évidements (9) et qui peuvent être mises en contact avec la surface frontale (10, 14) de la bague extérieure de palier (8, 30).

10. Palier à roulements (16) selon une des revendications 7 à 9, **caractérisé en ce que** les moyens de blocage sont de seconds ressorts (23, 23A, 23B) s'étendant dans le sens circonférentiel de la cage de palier (7, 22, 27, 34) et qui possèdent à leur extrémité libre des brides élastiques s'étendant depuis le plan des évidements (24) et qui peuvent être mises en contact avec la surface frontale (10, 14) de la bague extérieure de palier (8, 30).

11. Palier à roulements (16) selon la revendication 10, **caractérisé en ce que** les seconds ressorts (23, 23A, 23B) sont disposés suivant un angle (α) par rapport au sens circonférentiel de 0 à 90 degrés, en particulier suivant un angle (α) de 20 degrés à 45 degrés.

12. Palier à roulements (16) selon une des revendications 7 à 11, **caractérisé en ce que** la bague extérieure de palier (8, 30) présente, au niveau de ses deux faces frontales, une collerette périphérique (31) s'étendant radialement vers l'extérieur et qui peut être mise en contact avec les faces frontales d'un siège de palier et que des moyens de blocage prévus au niveau de la cage de palier (7, 22, 27, 34) sous la forme de ressorts et/ou d'une collerette ou de segments de collerette (28) peuvent être mis en contact avec la collerette périphérique (31) pour bloquer la position de la cage de palier (7, 22, 27, 34) par rapport à la bague extérieure de palier (8, 30).

13. Arbre (1) comportant un corps de base en forme de tronçon tubulaire et au moins un palier à roulements (16) selon une des revendications 7 à 12.

14. Arbre selon la revendication 13, **caractérisé en ce que** l'arbre (1) est un arbre de réglage d'une commande de vanne à course variable ou d'un arbre à cames (1) d'un moteur à combustion.
